(19) Europäisches Patentamt

European Patent Office

Office européen des brevets

(11) Veröffentlichungsnummer : **0 332 964 B1**

(12) **EUROPÄISCHE PATENTSCHRIFT**

(45) Veröffentlichungstag der Patentschrift :
27.05.92 Patentblatt 92/22

(21) Anmeldenummer : 89103865.5

(22) Anmeldetag : 06.03.89

(51) Int. Cl.⁵ : **B01D 53/34**

(54) **Verfahren zur Entfernung von Iod und Iodverbindungen aus Gasen und Dämpfen mit silberhaltigem Zeolith X.**

(30) Priorität : **16.03.88 DE 3808742**

(43) Veröffentlichungstag der Anmeldung :
**20.09.89 Patentblatt 89/38**

(45) Bekanntmachung des Hinweises auf die
Patenterteilung :
**27.05.92 Patentblatt 92/22**

(84) Benannte Vertragsstaaten :
**BE CH DE FR GB LI SE**

(56) Entgegenhaltungen :
**EP-A- 0 175 435**
**EP-A- 0 212 849**
**WO-A-81/00413**
**FR-A- 2 127 473**

(56) Entgegenhaltungen :
**PATENT ABSTRACTS OF JAPAN, vol. 10, no.**
**235 (C-366((2291), 14 August 1986; & JP-A-61**
**68 127 (HOKKAIDO ELECTRIC POWER**
**CO.INC.) 08.04.1986**

(73) Patentinhaber : **BAYER AG**
**W-5090 Leverkusen 1 Bayerwerk (DE)**
Patentinhaber :
**KERNFORSCHUNGSZENTRUM KARLSRUHE**
**GMBH**
**Weberstrasse 5 Postfach 3640**
**W-7500 Karlsruhe 1 (DE)**

(72) Erfinder : **Puppe, Lothar, Dr.**
**Am Weiher 10A**
**W-5093 Burscheid (DE)**
Erfinder : **Wilhelm, Jürgen**
**An der Sommerhaelde 2e**
**W-7519 Gondelsheim/Baden (DE)**

## Beschreibung

Die Erfindung betrifft ein Verfahren zur raschen und nahezu vollständigen Entfernung von Iod und/oder organischen Iodverbindungen mit einer niedrigen Anzahl von Kohlenstoffatomen aus Gasen und/oder Dämpfen mit silberausgetauschtem Zeolith X.

Zur Entfernung von organischen Iodverbindungen und/oder Iod aus Gasen, insbesondere zur Abscheidung von radioaktivem Spaltprodukt-Iod aus Atmosphären in kerntechnischen Anlagen, ist es bekannt, Aktivkohle oder mit Iod und/oder Iod imprägnierte Aktivkohle anzuwenden [R.E. Adams, R.D. Ackley; Kapitel 2.1: "Trapping of Radioactive Iodine and Methyliodide by Iodized Charcoal" in Nuclear Safety Program Annual Progress Report for Period Ending, Dezember 31, 1967, ORNL-4228 (April 1968, S. 99 bis 114)]. Auch aminimprägnierte Aktivkohlen werden benutzt.

Dieses Adsorptionsmaterial ist jedoch nicht überall verwendbar, da es brennbar ist und bei relativ niedrigen Temperaturen, beispielsweise 150°C, das adsorbierte Iod in nennenswerten Mengen bereits wieder freigibt. Treten höhere Temperaturen im zu reinigenden Gas auf, oder muß mit einer starken Erwärmung des Adsorbermaterials durch die Zerfallswärme radioaktiver Spaltprodukte gerechnet werden, müssen temperaturfeste und unbrennbare Materialien verwendet werden.

Es wurde festgestellt, daß Spaltprodukt-Iod nicht nur in elementarer Form, sondern auch in Form von organischen Verbindungen niederer Kohlenstoffzahl, beispielsweise in Form von radioaktivem Methyliodid, in Abgasen kerntechnischer Anlagen auftritt. Aus diesem Grunde müssen Adsorbermaterialien, die allgemein verwendbar sein sollen, in gleichem Maße auch organische Iodverbindungen zurückhalten.

Andere, zur Iodabscheidung eventuell bei genau definierten Adsorptionsbedingungen brauchbare Adsorbermaterialien, wie z.B. silberimprägnierte keramische Sinterprodukte (sogenannte Berl-Sättel), silberbeschichtete Kupferspäne oder silberbeschichtetes Silicagel, sind entweder wenig bzw. überhaupt nicht effektiv für die Zurückhaltung von Methyliodid oder verlieren ihre Wirksamkeit bei Durchgang von Heißdampf. Darüber hinaus besitzt imprägniertes Silicagel die Eigenschaft, Wasser aufzunehmen und dadurch seine Festigkeit einzubüßen. Diese Materialien sind daher für eine allgemeine Anwendung, d.h. für eine Verwendung in verschiedenartigen Iodentfernungsanlagen unter gegebenenfalls unterschiedlichen, eventuell sogar rasch wechselnden, Adsorptionsbedingungen, beispielsweise während eines Unfalls oder nach einem Unfall, unbrauchbar.

Die in der DE-A 2 109 146 beschriebenen silberimprägnierten Sorptionsmittel-Formteilchen, die überwiegend aus amorpher Kieselsäure bestehen, zeigen zwar eine hohe Sorption für Iod bzw. Iodverbindungen und sind gegen Heißdampf beständig, haben aber den Nachteil, daß die Salzimprägnierung unter den Heißdampfbedingungen bei 150°C bereits ausgewaschen werden kann.

Gegen Auswaschungen beständig sind dagegen silberausgetauschte Molekularsiebzeolithe. Zeolithe sind Alumosilikatgerüste mit der allgemeinen Formel

$$M_{m/z} [m\ AlO_2 \cdot n\ SiO_2] \cdot q\ H_2O$$

wobei $M_{m/z}$ austauschbare Kationen, $[m\ AlO_2 \cdot nSiO_2]$ das anionische Gerüst und $q\ H_2O$ die sorbierte Phase bedeuten. Entsprechende Zeolithe sind beispielsweise in D.W. Breck, Zeolite Molecular Sieves, John Wiley & Sons, Inc. New York 1974 beschrieben.

Für die Iodsorption sind bereits silberausgetauschte Molekularsiebe untersucht worden [D.T. Pence, F.A. Duce, W.J. Maeck, Proceedings 12th AEC, Air Cleaning Conference, Oak Ridge, TN, January 1973, S. 417; J.G. Wilhelm: "Trapping of Fission Produkt Iodine with Silver Impregnated Molecular Sieves", presented at the International Congress of the Diffusion of Fission Products, Saclay, France, November 4th to 6th 1969. Bericht der Gesellschaft für Kernforschung mbH, Karlsruhe, No. KFK-1065 (October 1969)]. Geeignete Molekularsiebe sind Natriumalumosilikate, beispielsweise von einer Zusammensetzung nach der Summenformel

$$Na_{86} [(Al\ O_2)_{86}\ (SIO_2)_{106}] \cdot xH_2O$$

mit der Faujasitstruktur.

Bei der Behandlung mit Silbernitrat werden die Natriumionen durch Silberionen ausgetauscht. Es werden hohe Abscheidegrade für Methyliodid und elementares Iod bei hohen relativen Luftfeuchten erreicht. Nach dem Stand der Technik setzt man tongebundene silberausgetauschte Zeolithgranulate zu Iodadsorption ein. Hiermit lassen sich Abscheidegrade von 99,9 % erzielen. Um die hohen Kosten für die Iodsorptionsfilter zu senken, ist es wünschenswert, höhere Abscheidegrade zu erzielen.

Der Erfindung liegt daher die Aufgabe zugrunde, ein Verfahren zu schaffen, das die Nachteile der mit den bekannten Adsorbermaterialien betriebenen Verfahren vermeidet und eine rasche, nahezu vollständige Entfernung von Iod und/oder organischen Iodverbindungen mit einer niedrigen Anzahl von Kohlenstoffatomen aus Gasen und/oder Dämpfen, aus kerntechnischen Anlagen, bei unterschiedlichen, rasch wechselnden und gegebenenfalls extremen Betriebsbedingungen bei oder nach einem Unfall, gewährleistet.

Die Erfindung löst die Aufgabe dadurch, daß die Iod und/oder Iodverbindungen enthaltenden Gase oder Dämpfe durch eine Schicht aus einem silberausgetauschten binderfreien Molekularsieb vom Strukturtyp des Faujasits geleitet werden, vorteilhafterweise durch ein Bett lose geschütteter Sorptionsmittel-Formteilchen (Granalien wie Kügelchen, Stäbchen, Körner, Splitter). Eine weitere vorteilhafte Ausführung der Erfindung ist das Durchleiten der Gase und Dämpfe durch aus Sorptionsmittel-Formteilchen, insbesondere aus Kugeln gebildete poröse Formkörper, wie durch poröse Platten, poröse Zylinder oder durch Zuleitung hin geöffnete, poröse Hohlkörper. Die zur Durchführung des Verfahrens zu verwendenden silberausgetauschten Sorptionsmittel bestehen aus Teilchen in Kugelform oder in Form von Granalien wie Stäbchen, Körner oder Splitter mit wenigen Millimetern Durchmesser bzw. Länge, die einen 80 bis 90 %igen Zeolith X- und einen 10 bis 20 %igen Zeolith A-Anteil aufweisen.

Die Granulate weisen eine hohe mittlere mechanische Festigkeit von $\geqq$60 N bei einem Durchmesser von 2 bis 4 mm auf. Nach einer 100-stündigen Behandlung in gesättigter Wasserdampfatmosphäre bei 160°C weisen die Granulate keinen Abfall in der mechanischen Festigkeit auf.

Weiterhin ist das erfindungsgemäß eingesetzte Granulat unempfindlich hinsichtlich des Wasserdampfeinflusses auf die Adsorptionsleistung. Nach dem oben beschriebenen Test zeigte sich kein Abfall in der Wasseradsorption.

Als Ausgangsmaterial für die Herstellung des Sorptionsmittel-Granulate eignet sich ein bindemittelfreies Molekularsiebgranulat vom Faujasit-Strukturtyp, das als kugelförmiges Granulat entsprechen den in den DE-A-3 401 485 und DE-B 1 203 238 beschriebenen Verfahren hergestellt worden ist.

Der Ionenaustausch mit Silbersalzlösungen wird entsprechend dem Stand der Technik vorgenommen. Beim Silberaustausch liegt das Austauschgleichgewicht auf der Seite des Zeoliths und daher kann auch vorteilhaft bei Raumtemperatur ausgetauscht werden. Außerdem ist die benötigte Silbermenge in einem einmaligen Austausch eintauschbar. Vorteilhaft gegenüber dem Stand der Technik ist, daß der Austauschgrad der erfindungsgemäß eingesetzten Zeolithe erheblich geringer sein kann, er liegt zwischen 20 und 35 Gew.-% Ag, bezogen auf die bindemittelfreie Granalie, bevorzugt zwischen 25 und 30 Gew.-% verglichen mit dem vorher angegebenen Stand der Technik von mehr als 40 %.

## Beispiel 1

30 kg Natriumzeolith X mit einem Wassergehalt (Glühverlust) von 25 % werden unter Zugabe von 15 l 30 %igem Kieselsol eines BET-Wertes von ca. 300 $m^2$/g im Intensivmischer zu einem Granulat von ca. 0,1-0,7 mm Korngröße verarbeitet. Dieses Vorgranulat wurde wurde in einen Granulierteller gegeben.

Dann wurde feinpulvriger Zeolith X fortlaufend dosiert in den rotierenden Teller eingetragen unter gleichzeitigem Aufsprühen des 30 %igen Kieselsäuresols an einer anderen Stelle des Tellers auf das sich bewegende Granulat. Dem Kieselsol wurde über eine Injektionsvorrichtung ein Wasserglasstrom beigemischt, so daß ein Verhältnis von Sol zu Wasserglas von 9:1 eingestellt wurde. Es wurde ein kugelförmiges Granulat von 2-4 mm erhalten.

5 kg des obigen kieselgelgebundenen Faujasitgranulats mit einem Wassergehalt von 35 Gew.-%, bezogen auf wasserfreies Granulat mit einer Körnung von 2 bis 4 mm, wurde in einen gummierten Behälter mit Siebboden eingefüllt. Durch die Granulat-Schicht wurde ein wäßrig-alkalische Natriumaluminat-Lösung im Kreislauf umgepumpt. Zur Herstellung dieser Aluminatlösung wurden 2,4 kg Tonerdehydrat (mit 65 % $Al_2O_3$) in 4,5 l 45 %iger Natronlauge (Dichte 1.48) bei Siedetemperatur aufgelöst und die entstandene, klare Lösung anschließend mit 33 Liter Wasser verdünnt. Die Aluminatbehandlung erfolgte zunächst über Nacht (15 Stunden) bei Umgebungstemperatur. Dann wurde die umlaufende Aluminat-Lösung durch einen in den Lauge-Kreislauf eingebauten Wärmeaustauscher auf 45°C erwärmt und 5 Stunden umgepumpt; anschließend wurde die Temperatur noch weitere 3 Stunden auf 80°C gehalten.

Die erhaltenen Granalien aus völlig kristallinem Mischzeolith wurden mit Wasser bis zu einem pH-Wert des ablaufenden Waschwassers von 9 bis 10 gewaschen und danach getrocknet. Nach der Röntgenanalyse bestanden die Granalien zu ca. 80 bis 85 % aus Na-Faujasit neben Natriumzeolith A.

## Beispiel 2

1285 g des in Beispiel 1 beschriebenen, aber noch nicht aktivierten Granulats, werden in eine abgedunkelte Säule gefüllt, mit 3000 ml einer Silbernitratsalzlösung, die 573 g $AgNO_3$ enthält, versetzt. Anschließend wird 8 Stunden lang die Salzlösung umgepumpt. Am Ende des Austausches läßt sich in der Austauschlösung kein Silber mehr nachweisen.

Des Granulat wird mit entionisiertem Wasser gewaschen, bei 110°C getrocknet und anschließend im Heißluftstrom bei 450°C aktiviert. Nach der Röntgenanalyse bestanden die Granalien zu ca. 75-80 % aus Ag-Faujasit neben Ag-Zeolith A. Die Bruchfestigkeit liegt bei 70 Newton.

### Beispiel 3

Die entsprechend den Beispielen 1 und 2 hergestellten Granulate wurden für die Iodsorption eingesetzt. In ein Filterbett wurde $H_2O$-Dampf von 105°C vorgeströmt. Anschließend wurde $CH_3J$ in den 160°C heißen Dampfstrom eingespeist, danach wurde wieder mit Wasserdampf nachgeströmt. Bei 10 cm Bettiefe ergibt sich ein Abscheidegrad von 99,99 %.

### Beispiel 4

Vergleichsbeispiel

In ein Filterbett wurden handelsübliche Silberzeolithgranalien entsprechend dem Stand der Technik eingefüllt. Die Durchführung des Versuches erfolgte nach dem Beispiel 3. Bei 10 cm Bettiefe ergibt sich ein Abscheidegrad von 99,9 %.

### Beispiel 5

Langzeitversuch: Abscheidung von elementarem Iod

Die entsprechend den Beispielen 1 und 2 hergestellten Granulate wurden für die Iodsorption eingesetzt. In einem Prüffilter mit dem Durchmesser von 2,5 cm, einer Schichtdicke an Zeolith-Granulat von 5 x 2,5 cm, wurde zur Konditionierung während 23 h mit einem Heißdampf-Luftgemisch (Verhältnis 2,7 : 1) bei einer Temperatur von 145°C vorgeströmt.
Die lineare Gasgeschwindigkeit betrug 31 cm/s. Anschließend wurde 1 h lang elementares Iod in den Zuluftstrom des Filters eingeleitet und schließlich wurde 24 h mit dem Heißdampf-Luftgemisch zur Erfassung auftretender Desorption gespült.
Die mittlere Konzentration an Iod im Gasstrom lag bei 0,26 mg/m³.
Die Abscheidegrade betrugen 99,973 % bei 5 cm und 99,978 % bei 7,5 cm Schichtdicke.

### Beispiel 6

Kurzzeitversuch: Abscheidung von elementarem Iod

Prüffilter und Heißdampf-Luftgemisch waren entsprechend Beispiel 5, nur die Temperatur lag bei 140°C. Die Konditionierung erfolgte während 0,5 h, die Einleitung von Iod für 0,5 h sowie die Spülung für 1,5 h. Die mittlere Konzentration an Iod im Gasstrom lag bei 1,27 mg/m³.
Die Abscheidegrade betrugen 99,961 % für 5 cm und 99,964 % 7,5 cm Schichtdicke.

### Beispiel 7

Kaltanfahrversuch: Abscheidung von elementarem Iod

Bei diesem Versuch wurden das Heißdampf-Luftgemisch (55 % $H_2O$-Dampf, 45 % Luft, lineare Gasgeschwindigkeit 25 cm/s 146°C) und das elementare Iod gleichzeitig über , das kalter Filter geleitet. Nach 3 Minuten erreichte das Filter die Taupunkttemperatur von 96°C, nach weiteren 8 Minuten wurde der Taupunkt überschritten, die Endtemperatur von 146°C wurde nach 60 Minuten erreicht.
Die Abscheidegrade für 5 cm betrugen 99,974 % und für 7,5 cm 99,984 %.

### Beispiel 8

Langzeitversuch: Abscheidung von $CH_3J$

Das Prüffilter mit dem Sorbens wurde mit einem Heißdampf-Luftgemisch von 154°C 48h lang konditioniert. Die lineare Gasgeschwindigkeit betrug 31 cm/s und das Heißdampf/Luft-verhältnis 2,7 : 1.
Anschließend wurde 7 h lang $CH_3J$ in den Zuluftstrom eingeleitet und danach 48 h mit dem Heißdampf-Luftgemisch gespült. Die mittlere Konzentration an $CH_3J$ betrug 0,35 mg/m³.
Die Abscheidegrade von 98,75 % wurden bei 5 cm Schichtdicke und von 99,83 % bei 7,5 cm Schichtdicke erreicht.

Beispiel 9

Konditionierung nahe dem Taupunkt Abscheidung von $CH_3J$

Das Prüffilter mit dem Sorbens wurde mit einem Heißdampf-Luftgemisch von 100 bis 105°C 19 h lang konditioniert. Die Gasgeschwindigkeit betrug 31 cm/s und das Heißdampf/Luft-Verhältnis 2,7 : 1.
Anschließend wurde innerhalb von 35 Minuten auf 152°C aufgeheizt und danach 7 h lang mit $CH_3J$ beladen. Die mittlere Konzentration an $CH_3J$ betrug 0,36 mg/m³.
Die Abscheidegrade von 99,38 % wurden bei 5 cm Schichtdicke und von 99,948 % bei 7,5 cm Schichtdicke erreicht.

**Patentansprüche**

1. Verfahren zur raschen und nahezu vollständigen Entfernung von Iod und/oder organischen Iodverbindungen mit einer niedrigen Anzahl von Kohlenstoffatomen aus Gasen und/oder Dämpfen, dadurch gekennzeichnet, daß die Iod und/oder Iodverbindungen enthaltenden Gase oder Dämpfe durch eine Schicht aus bindemittelfreien silberausgetauschten Molekularsiebgranulaten vom Strukturtyp des Faujasits geleitet werden.

**Claims**

1. A process for the rapid and substantially complete removal of iodine and/or organic iodine compounds containing a small number of carbon atoms from gases and/or vapours, characterized in that the gases or vapours containing iodine and/or iodine compounds are passed through a layer of binder-free silver-exchanged molecular sieve granules of the faujasite type.

**Revendications**

1. Procédé pour l'élimination rapide et presque complète de l'iode et/ou des composés organiques d'iode à faible nombre d'atomes de carbone des gaz et/ou des vapeurs, caractérisé en ce que les gaz ou vapeurs contenant de l'iode et/ou des composés d'iode sont envoyés à travers une couche de granulés de tamis moléculaires contenant de l'argent, exempts de liant, à structure du type faujasite.